# EUROPEAN PATENT APPLICATION

(11) **EP 2 530 590 A1**
(43) Date of publication of application: **05.12.2012**
(21) Application number: 12169477.2
(22) Date of filing: 25.05.2012
(51) Int. Cl.: G06F 9/455

(54) **Object pipeline-based virtual infrastructure management**

(30) Priority: 01.06.2011 US 201113150650
(71) Applicant: Morgan Stanley, New York, NY 10036 (US)
(72) Inventor: Fulop, Balazs, Budapest 1095 (HU); Romsics, Bence, Budapest 1095 (HU); Kotsovinos, Evagelos, London E14 4QA (GB)
(74) Representative: Chettle, John Edward

(57) **Abstract**

A computer-implemented system and method for managing a virtualized infrastructure including receiving an input including a string of multiple commands and arguments, which will cause a transformational action to be performed on the virtualized infrastructure. Based on the string, instructions are retrieved which will implement actions called for by the commands in combination with the arguments associated with the commands. The retrieved instructions are executed to populate a partition of an object pipeline with virtual infrastructure entities based upon a first of the commands. Based upon a second of the commands and an argument, at least one entity is removed from the partition. Based upon a third of the commands, the transformational action is performed on the reduced population of the entities in the partition.

## Description

### FIELD

This disclosure relates generally to virtualized systems, and, more particularly, to management of an infrastructure made up of virtualized infrastructure entities such as hosts, clusters, network storage, virtual machines, etc.

### BACKGROUND

Virtualization involves the virtual simulation of hardware or software assets on existing computer systems. Virtualization has many advantages over the traditional physical computer infrastructure, such as saving physical space, reducing cooling requirements, streamlining information technology operations and increasing flexibility to meet new computing demands. However, large-scale virtualized infrastructure is difficult to manage. Management of virtualized infrastructure typically involves selection of a specific subset of virtual machines relative to which an operation will be performed, and executing bulk operations on the selected subset. However, there are many different operations that can be performed, and not all can or will be performed on a regular and consistent basis. As a result, performing these operations typically requires knowledge of writing computer code to effect the operations, creating inefficiencies in the process and making management inaccessible to those without the necessary software skills.

### SUMMARY

In one aspect of this disclosure, a computer-implemented method for managing a virtualized infrastructure is disclosed. The method includes receiving an input, the input comprising a string of multiple commands and arguments which, when initiated, will cause a transformational action to be performed on the virtualized infrastructure. Based upon the commands in the string, instructions are retrieved which will implement actions called for by the commands in combination with the arguments associated with the commands. The retrieved instructions are executed to populate a partition of an object pipeline with entities of the virtualized infrastructure based upon a first of the commands, remove at least one entity from the partition based upon a second of the commands and an argument so as to create a reduced population of entities in the partition, and perform the transformational action on the reduced population of the entities in the partition based upon a third of the commands.

In another aspect of this disclosure, a computer apparatus for managing a virtualized infrastructure is disclosed, including at least one programmable processor, and data storage accessible by the processor. The at least one programmable processor is connected to the data storage to receive information from the data storage. The data storage comprises a data architecture having a hierarchal library of executable commands, the executable commands comprising population executable commands which, when for example executed by the processor, will cause selecting and filtering of entities within the virtualized infrastructure, and action executable commands which will cause performing of actions on entities within the virtualized infrastructure. The data architecture also comprises an object pipeline which will be populated with at least some entities present within the virtualized infrastructure based upon a command string. The data architecture also comprises a command universe that defines a structure for the action executable commands, such that a sub-set of available action executable commands for use in the command string is defined by entities present within a current state of the object pipeline. When an input comprising a string of specific commands and arguments is received, corresponding static and dynamic executable commands are selected from the hierarchal library based upon the specific string. This may for example be caused by the processor when executing the executable commands. The populated population executable commands are invoked with information reflecting the arguments sequentially to establish the object pipeline from among a set of entities in of the virtualized infrastructure to which a specific transformational action will be applied. The action executable commands are invoked to perform the specific transformational action on the set populating the object pipeline.

The steps in claims 7 to 12 may be caused by the processor, which may be configured to cause the steps when executing computer executable commands stored in the data storage.

The foregoing has outlined rather generally the features and technical advantages of one or more embodiments of this disclosure in order that the following detailed description may be better understood. Additional features and advantages of this disclosure will be described hereinafter, which may form the subject of the claims of this application.

### BRIEF DESCRIPTION OF THE DRAWINGS

For the purposes of example only, this disclosure is further described in the detailed description that follows, with reference to the drawings, in which:

FIG. 1 is a high-level representation of an example virtual machine system architecture suitable for use with the object pipeline-based virtual infrastructure management system described herein;

FIG. 2 is a flow-chart representing an example sequence of steps implementing the object pipeline-based virtual infrastructure management system in the architecture of FIG. 1;

FIG. 3 is a flow-chart representing a continuing example sequence of steps for implementing the object pipeline-based virtual infrastructure management system of FIG. 1;

FIG. 4 illustrates an example input string to effect an example management operation;

FIG. 5 illustrates a portion of the example input string of FIG. 4;

FIG. 6 is a high level representation of an example object pipeline as used by the object pipeline-based virtual infrastructure management system of FIG. 1;

FIG. 7A is a continuing high-level representation of the example object pipeline of FIG. 6; and

FIG. 7B is an alternative continuing high-level representation of the example object pipeline of FIG. 6.

### DETAILED DESCRIPTION

A system and method for object pipeline-based virtual infrastructure management as described herein has been developed, which automates the management functions so that programming ability is not required, thereby boosting management efficiency and accessibility. Advantageously, the knowledge required is what is to be done and to which components of the infrastructure. These following constructs make this possible.

First, an "object pipeline" data construct is used to identify a set of entities within the virtualized infrastructure ("virtualized infrastructure entities" such as particular virtual machines, hosts, clusters, *etc.*) upon which filtering, selection or action commands may be executed. Identification of the desired set of virtualized infrastructure entities occurs in a hierarchal manner. Initially, the object pipeline is populated with a broad selection of virtualized infrastructure entities encompassing a subset all the entities representing the largest group of entities on which a subsequent transformational action will be taken. Filtering and selection techniques may then be applied to the object pipeline, adding or removing entities inside the object pipeline based upon commands until the actual desired subset of entities on which the action will be performed is achieved. The desired action is then performed on the remaining entities contained within the object pipeline. The pipeline may continue to persist so long as it remains useful. For example, subsequent hierarchal addition and/or selection of virtualized infrastructure entities and execution of desired actions may be undertaken on an already existing and populated object pipeline.

Second, a "command universe" data construct is used to build a command to effect the action(s) desired. The command universe contains within it every command that may be executed for the filtering/selection of virtualized infrastructure entities, and execution of actions upon those virtualized infrastructure entities. This is implemented as an entity definition-based command universe, wherein only a predefined set of commands are available for an entity type.

Third, a simplified, intuitive syntax is used to construct the commands. Coupled with the command universe, this advantageously ensures input of only sensical (or allowed) command strings, greatly easing automation of filtering/selection of virtualized infrastructure entities and executions of actions upon entities. Recognition of the limited syntax command string enables the retrieval of pre-written executable code, that, when executed performs the requested function on the object-pipeline or on the virtualized infrastructure entities. Therefore, the combination of the object pipeline and command universe allows anyone to execute complex actions on a targeted subset of virtualized infrastructure entities, enabling simpler and more efficient administration of complex virtual infrastructure.

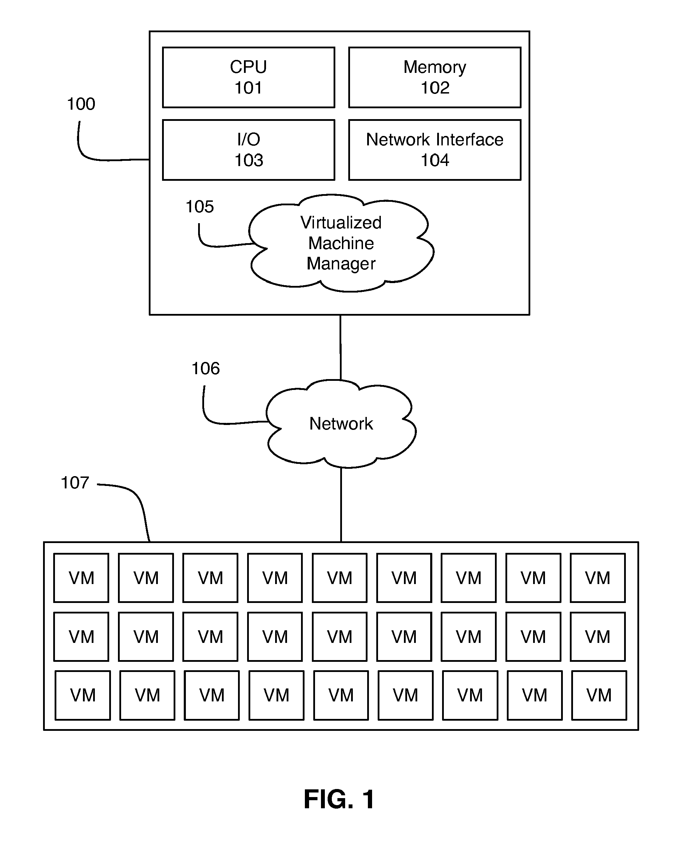

FIG. 1 is a high-level representation of an example virtual machine system architecture suitable for use with the object pipeline-based virtual infrastructure management system **100** described herein. The object pipeline-based virtual infrastructure management system **100** as described herein may be implemented using software running on hardware of varying configurations. For instance, computing components may be configured for executing computer program instructions and processes implementing the approach described herein. These hardware components may include one or more central processing units (CPU) **101,** memory **102,** input/output (I/O) devices **103,** and a network interface **104.**

The CPU **101** processes and executes the computer program instructions that cause the operation described herein to occur. Random access memory (RAM) and/or fast access cache memory **102** preferably provides fast data supply to CPU. Long-term storage may be provided as a more permanent form of computer memory, and may be, for example, a hard disk, optical disk, flash memory, solid-state memory, tape, or any other type of memory as is used to store program instructions and data.

The I/O device(s) **103** permit human interaction with the computer system, such as (but not limited to) a mouse, keyboard and computer display. The I/O device(s) **103** may also include other interactive devices, such as (but not limited to) touch screens, digital stylus, voice input/output, etc.

The network interface device **104** may provide the computing system with connection to a network **106,** which may be a wireless or wired connection to the virtual machine infrastructure. The network **106** may be, for example, the Internet, a corporate intranet, or any other computer network through which a connection to or communication with the virtual machine infrastructure **107** (or other systems) can occur.

When implemented as an architecture, such as the example architecture of FIG. 1, the object pipeline-based virtual infrastructure management system **100** uses a virtualized machine manager **105** software process running on the CPU **101** to implement the object pipeline and command hierarchy data architectures. The virtualized machine manager **105** may also receive commands from the user through the I/O device **103** and, after executing the method described below, transmit instructions to the selected virtual machines of virtualized infrastructure **107.**

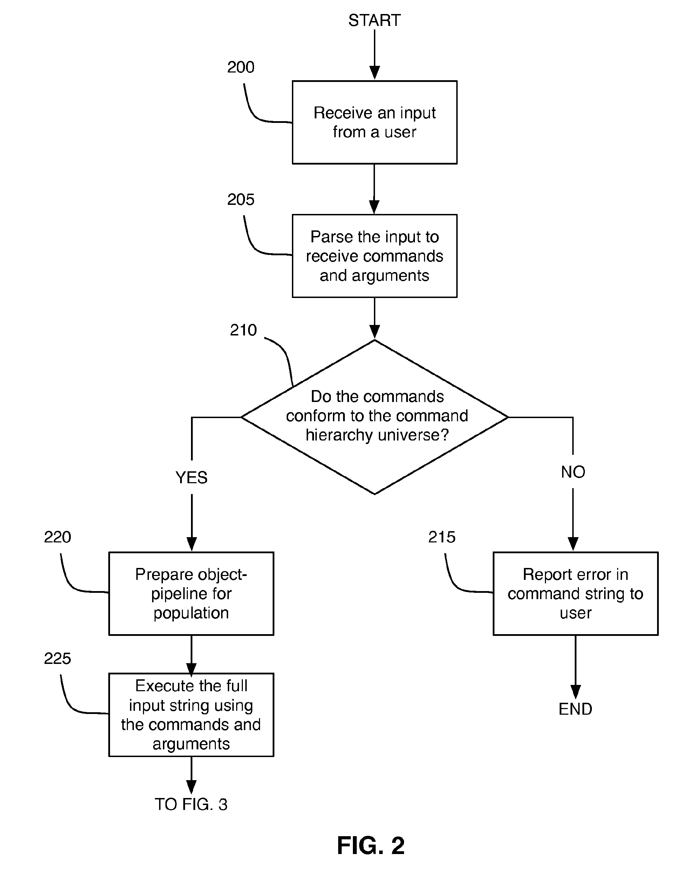

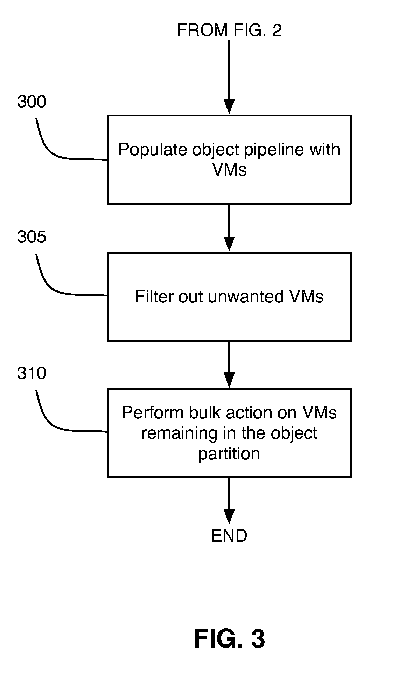

FIG. 2 and FIG. 3 collectively are a flow-chart representing an example sequence of steps for implementing the object pipeline-based virtual infrastructure management system in the example architecture of FIG. 1. The object pipeline-based virtual infrastructure management system **100** first receives an input from a user (step **200).** The input is created by the user using the I/O device **103.** Depending upon the particular implementation, the input may take the form of a string of characters if a text-based input system is used, or input may be provided using a graphical user interface in which selectable pre-programmed on-screen functions may be used to create the command. In either case, the command is parsed to retrieve a sequence of commands and arguments from the input (step **205).** If a text-based input is used, symbols and reserved strings may be used to separate and identify relevant segments of the input.

Once the input string is parsed, the object pipeline-based virtual infrastructure management system **100** determines whether the commands conform to the command hierarchy universe in the order they appear (step **210).** As described above, entity definitions restrict the commands available to be invoked against them. Therefore, when building a command string, the preceding commands that populate the object pipeline with virtualized infrastructure entities will invariably limit the set of subsequent commands available to use next, as (when taking actions upon the entities) the available commands will be based on the entities in the object pipeline. Therefore, if a command is invoked upon an entity that does not support the command, the input string is deemed to fail to conform to the command hierarchy, and an error is reported to the user, ending the method (step **215).** If the input string conforms to the command hierarchy, then an object pipeline is prepared for use (step **220).** Finally, the commands are executed in the order they appeared in the input string (step **225)** because the result of executing an early part of the string may be used in executing a later part of the string. Pre-programmed stored executable code, keyed to the commands, is then used with information from the arguments in the string to execute the requested functions.

Generally, execution involves populating the prepared object pipeline with virtualized infrastructure entities in accordance with one or more of the initial commands from the input string (step **300).** Unwanted virtualized infrastructure entities are then filtered out of the object pipeline, in accordance with one or more subsequent commands from the input string (step **305).** Finally, one or more bulk actions corresponding to one or more other commands in the string are executed on all the virtualized infrastructure entities then populating the object pipeline (step **310**). Subsequently, further filtering can be performed to add or subtract entities into one or out of the existing object pipeline. Similarly, further command execution can be performed upon the existing object pipeline, if desired.

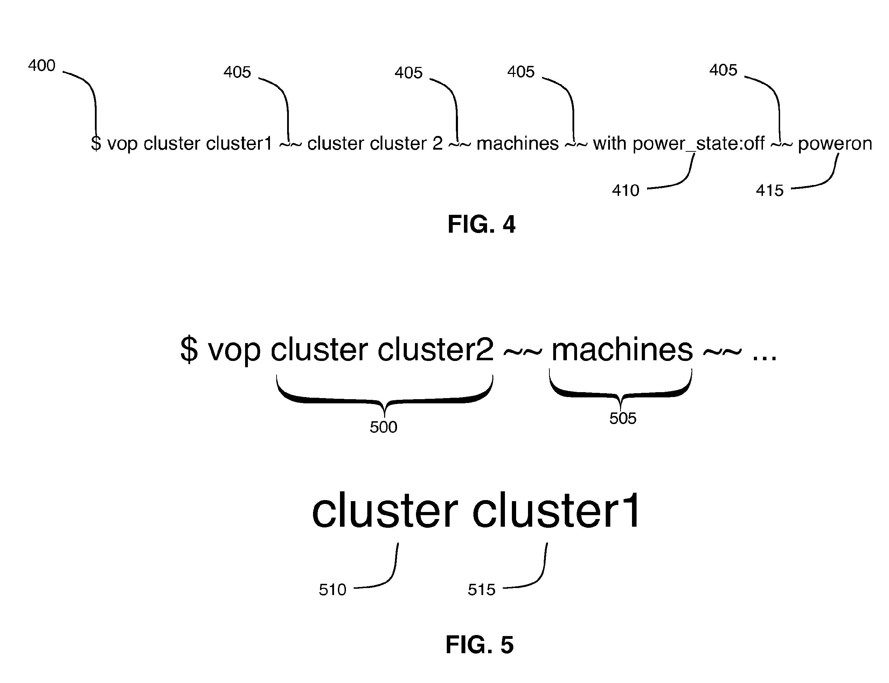

This approach will now be illustrated by a representative example command string in which FIGS. 4 and 5 illustrate the example input string used to effect an example management operation. The management operation is to power on certain virtual machines in two different clusters. The illustrative example input string retrieves virtual machines belonging to two virtual machine clusters that are currently powered off, and powers them on.

With respect to basic syntax, a reserved string "vop" **400** is used to indicate the start of a new input string. Similarly, reserved symbols may be specified and used to designate different portions of the input. For example, a double tilde ("∼∼") symbol **405** (FIG. 4) may be used to separate one command from the next command in sequence. In implementation, other characters, strings, symbols or logical breaks may be used (or added) as desired.

The first command in the string is the reserved string "cluster" 510 (FIG. 5) followed by a name, which populates the object pipeline with an object representing an existing virtual machine cluster, as specified by the name. The reserved string "cluster" **510** also puts the object pipeline-based virtual infrastructure management system **100** on notice that the text immediately (*i.e.,* the name) following the "cluster" command **510** (FIG. 5) identifies the desired cluster. Execution of "cluster cluster1" and "cluster cluster2" therefore populates an example object pipeline with two clusters named "cluster1 and "cluster2."

The "machines" **505** command transforms cluster objects into the virtual machine objects they represent. This allows action and examination to be taken upon the individual virtual machine objects, rather than the cluster as a whole, which is necessary here because the involved clusters may have some virtual machines that are powered off and some that are powered on.

The "with power_state:off" **410** part of the string is a compound input string having a command and an attribute. The "with" portion of the string **410** is a filtering command designed to keep those virtual machines currently in the object pipeline having the desired attribute. The "power_state:off" attribute is the filtering attribute. Therefore, execution of the "with power_state:off" **410** string removes from the object partition all virtual machines that do not have a power state corresponding to off; or in other words, all virtual machines that are currently powered on.

The "poweron" **415** part of the string is simple having only a command. This command instructs all virtual machines then in the object pipeline to power on, and is applied to the now filtered group of virtual machines populating the object pipeline *(i.e.,* only those virtual machines in "cluster1 and "cluster2" that are currently powered off).

For ease of use, and consistent with the hierarchical approach, the commands that are used to construct a string can optionally be broken up into classes for different circumstances, for example, Base commands, Server commands, Cluster commands, Host commands, Virtual Machine commands, Task commands and Scheduled Task commands. Representative examples of such commands and what they can be used to do. In implementation, use of each command would invoke pre-written programming code, for example programming code written using an appropriate task automation framework, such as Windows PowerShell, or directly via programming code written in C++ or Java to accomplish what is called for by the command, the particular code used to implement the command being irrelevant to understanding the concepts herein. The following are representative example commands grouped according to the optional classes. It should be understood that these specific commands and the results thereof are merely intended as illustrative of the concept to aid in understanding and are not intended to represent the only commands or otherwise limit the approaches described herein.

**BASE Commands:** The following are examples of command that can be used as an initial command, when nothing will be returned as a result of the previous command, or when the objects are inherently present. If an initial command, some argument will be included (e.g. *name, hostname, key*) to identify some object. When called on previous objects (i.e. as a result of a preceding command), this identification may be omitted.

**cluster [name:<NAME>] [driver:<DRIVER>] [mgmt_server:<MANAGEMENT SERVER>]:** This command could be used to create a *cluster* object identified by *name* or return one parent *cluster* object for each *host* object.

**Host [hostname:<NAME>] [driver:<DRIVER>] [mgmt_server:<MANAGEMENT SERVER>]:** This command could be used to create a *host* object identified by *hostname* or returns one parent *host* object for each *virtual machine* object.

**login <defaultlfile:<FILE>> [user:<USER NAME>]:** This command could be used to log into a particular device. If on-demand login is implemented in a security system such as provided in Kerberos, a command like this would be unnecessary.

**server [hostname:<NAME>] [driver:<DRIVER>]:** This command could be used to create a *management server* object identified by *hostname.*

sessions: This command could be used to list the currently valid authentication sessions to *management servers.*

**scheduled_task <driver: <DRIVER>> <mgmt_Server:<MANAGEMENT SERVER>> <key:<TASK KEY>>**: This command could be used to return the scheduled task object identified by *task key.*

**staggered:** This command could be used to prepare the object space to create scheduled tasks on the management server for hard power operations (power-on, power-off, reset, suspend) of virtual machines. As a result, power operations will not be executed at the same time, but rather, in short succession with a delay between each power operation to avoid excess loading. For example: "vop server ... ∼∼ machines ∼∼ staggered ∼∼ poweron" would execute a staggered power on operation for machines in the object pipeline.

**task <driver:<DRIVER>> <mgmt_server:<MANAGEMENT SERVER» <key:<TASK KEY>>**: This command could be used to return a *task* object identified by the *key* option. Would return version information for the underlying library.

**vm <name:<NAME>Ihostname:<FQDN>> [driver: <DRIVER>] [mgmt_Server:<MANAGEMENT SERVER>]:** This command could be used to return a *virtual machine* object specified by the *name* or *hostname* option. The *name* option is the name as the machine was provisioned, the *hostname* is an identifier of the OS running in the VM.

**bug <summary:<SUMMARY>>:** This command could be used to send a bug report to a distribution list with the current output and a stack trace. The *summary* argument can be an option that will cause additional information to be provided to give maintainers additional information about the bug.

**count:** This command counts the objects returned from a previous command and returns that number.

**filter <[+I-]ATTRIBUTE> [<[+I-]ATTRIBUTE>** [...]]: This command could be used to filter for attributes. The plus or minus sign allows one to include or exclude certain attributes from the objects. However, some base attributes should not be allowed to be filtered out as this could render the object unidentifiable.

**help:** This command could be used to obtain a short usage summary of the commands that are available at the given point.

**quiet:** This command could be used to suppress output.

**uniq:** This command could be used to remove duplicated objects from the object space.

**with <ATTR[.SUBATTR[...]][:REGEX]> [ATTR[.SUBATTR[...]][:REGEX]** [...]]: This command could be used to filter objects out of the object pipeline. The command preserves any object in the object pipeline if it "matches" any of the complex expressions given to *with.*

**without <ATTR[.SUBATTR[...]][:REGEX]> [ATTR[.SUBATTR[...]][:REGEX]** [...]]: This command is the same as the *with* command but negated so that objects *without* the complex expressions given with *without* are preserved within the object pipeline.

**SERVER Commands:** The following commands may be executed upon a *server* object.

**machines [datacenter:<DATACENTER>Icluster:<CLUSTER>IHOST:<HOST>]:** This command could return every *virtual machine* object managed by a *management server* and can include a filter for a given *data center, cluster* or *host.*

**hosts [datacenter:<DATACENTER>]:** This command could return every *physical host* object managed by the *management server* and can include a filter for a given *data center.*

**clusters [datacenter:<DATACENTER>]:** This command could return every *cluster* object belonging to one or more *management server.*

**details:** This command could show detailed information about the *management server.*

**checkout:** This command could result in performing of check logic for the <management server> and return results of the check (warnings, etc).

**tasks [begin:<MINUTES>]:** This command could return the *task* objects on some *management server,* which has been started in the last MINUTES period.

**schedule:** This command could return every scheduled task object present on the *management server.* Optionally, it could return both past and future scheduled task object.

**time:** This command could return the current time on the *management server.*

**db:** This command could return the DB of a particular *management server.*

**ping:** This command could check a server for accessibility using, for example, a User Datagram Protocol (UDP) ping

**perfmetric:** This command could be used to get performance metrics defined on a server.

**CLUSTER Commands:** The following commands may be executed on a *clusters* object.

**hosts:** This command could be used to returns every *physical host* object belonging to the *cluster.*

**machines [host:<HOST>]:** This command could be used to return every *virtual machine* object belonging to the *cluster* and can allow filtering for a given *host.*

**details:** This command could also be used to show detailed information on the *cluster.*

**checkout:** This command performs the same function as the above but performs the check for the *cluster.*

**ha <enableldisable>:** This command could be used to enable or disable high availability features on the *cluster.*

**rebalance:** This command could be used to perform a re-balancing of a *cluster* and can optionally be configured to be a one time event or ongoing.

**HOST Commands:** The following commands may be executed upon a *host* object.

**maintenance <enter [evacuate]lexit> [force] [timeout:<SECONDS>]:** This command could be used to enter to or exit from a maintenance mode. The maintenance mode means the host does not run any *virtual machines.* Starting *virtual machines* on that host or moving *virtual machines* to that host would not be allowed, thereby making it safe to perform maintenance on the host. The *timeout* option can be used when automatic *virtual machine* placing is turned on. Therefore, the management server will be able to move the *virtual machines* off that host, in the given timeout, when maintenance mode is entered. By default, the powered off *virtual machines* on a host would not be affected by *maintenance mode.* Advantageously, by providing the optional *evacuate* switch, forced moving of unaffected *virtual machines* can occur.

**shutdown [force]:** This command could be used to shut down the *host.*

**reboot [force] [sync [timeout:TIMEOUT]]:** This command is used to reboot the *host.*

**details:** This command performs the same function as above, but shows detailed information on the *host.*

**checkout:** This command performs the same function as above but performs the check for the *host* and would typically only show warnings.

**cluster:** This command could be used to retrieve the cluster for this *host.*

**machines:** This command could return every *virtual machine* object currently on the *host.*

**logs [start:<LINE NUM>] [lines:<LINE NUM>] [severity:<SEVERITY>] [target:<TARGET>] [file:<FILE NAME TEMPLATE>]:** This command would be used to get logs from the *host,* and allows one to specify a range of log contents, starting from a (*start*), extending to a number of lines to be returned (*lines*), or exact string matches for the *severity* and *target* fields. Optionally, a file name can be provided to specify a destination location for saved logs.

**nics:** This command would obtain a list of the *host's* Network Interface Cards.

**storage [refresh]:** This command could refresh the storage information and settings. Without the *refresh* option, only the configured storage items (data stores) would be listed as arguments.

**network refresh:** This command could refresh the network information and settings.

**agent restart:** This command could restart the agent running on the *host.*

**alerts:** This command could show triggered alarms for a *host.*

**alerts ack:** This command could acknowledge all triggered alarms.

**alerts reset:** This command could reset all triggered alarms to green.

**ha reconfig:** This command could be used to reconfigure a host's high availability setting.

**disconnect:** This command could be used to disconnect the *host* from the *management server* and would implicitly disconnect the *virtual machines* on that host too.

**reconnect:** This command would be used to connect or reconnect a *host* to the *management server* and would therefore work from starting either in a *connected* or a *not connected* state. Optionally, it could be limited to a pure reconnect (i.e. following a disconnect), in which case a connect-type command might also be needed.

**not_ok:** This command is an example of a shortcut command that can be provided to replace a longer command such as the example input, "without status:green connected:1 maintenance:0 power_state:on." This will filter for *hosts* those are counted in the *cluster* output under the label *not_ok.*

**perfdata <filtering expressions>:** This command could be used for filtering according to (for example) date information. Example arguments might include a date (with a specified format), "last_7_days" (to include data points from the last 7 days), "business_hours_only" (to include only those data points whose time stamp matches "0 < $weekday and 6 > $weekday and 8 < $hour and 18 > $hour"), "weekend_only" (to only include those data points whose time stamp matches "1 > $weekday or 5 < $weekday"), "evening_only" (to include only those data points whose time stamp matches "0 < $weekday and 6 > $weekday and ( 8 >= $hour or 18 <= $hour )").

**ping:** This command checks host for reachability (again using, for example, a UDP ping)

**hardware:** This command could be used to show hardware related information.

**syslog:** This command could be used to show a *syslog* server the logs of a *host.*

**events begin_time:<BEGIN_TIME> end_time:<END_TIME> file:<OUTPUT>:** This command could be used to download events happening within the specified time frame to file.

**readd:** This command could be used to remove a *host* from the *cluster* and re-add it.

**VIRTUAL MACHINE Commands**: The following commands may be executed upon a virtual machine.

**host:** This command could get the *host* for a *virtual machine.*

**cluster:** This command could get the cluster for a *virtual machine.*

**owner:** This command could be used to look up the owner of a *virtual machine.*

**poweroff:** This command could be used to do a hard shut down (i.e. power off) of a *virtual machine.*

**shutdown:** This command could be used to do a soft shut down of a *virtual machine.*

**reset:** This command could be used to reset a *virtual machine* (hard reset).

**reboot:** This command could be used to reboot the *virtual machine* (soft reset).

**suspend:** This command could be used to suspends the *virtual machine.*

**standby:** This command could be used to put the *virtual machine* into *standby.*

**poweron:** This command could be used to power on the *virtual machine.*

**nics [enableldisable]:** This command would obtain a list of the \*virtual machine's* Network Interface Cards

**guid:** This command could be used to get the group unique identifier (GUID) of the *virtual machine.*

**details:** This command could be used to show detailed *virtual machine* configuration information.

**checkout:** This command could show warnings related to the *virtual machine* configuration information.

**answer choice_of_text:** This command could be used to answer a *virtual machine* question.

**migrate:** This command could be used to query possible cluster targets for migration.

**migrate hostname:hostname [mgmt_server:hostname]:** This command could be used to migrate a *virtual machine* to a given *hypervisor.*

**perfdata <filtering expressions>:** This command could be used for filtering according to (for example) date information *virtual machine* information *according* to some information.

**storage:** This command could be used to return the data stores for a *virtual machine.*

**events begin_time:<BEGIN_TIME> end_time:<END_TIME> file:<OUTPUT>:** This command could be used to download events to a file.

**unregister:** This command could be used to deregister a *virtual machine* from inventory.

**TASK Commands:** These commands may be used to control the object pipeline-based virtual infrastructure management system **100.**

**wait:** This command could be used to cause the system to wait for completion of the given tasks before continuing.

**cancel:** This command could be used to cancel a command, however, it is likely that not all commands, one initiated can be canceled.

**SCHEDULED TASK Commands:** These commands may be used to control task scheduling for the object pipeline-based virtual infrastructure management system **100.**

**remove:** This command could be used to remove a scheduled task from the management server.

It should now be appreciated from the example commands and the use of pre-written, stored code that can actually accomplish at least one action on one entity, the techniques described herein allow for high-level management tasks to be accomplished by anyone who can string together the necessary commands without having any knowledge of the underlying code necessary to accomplish the desired task.

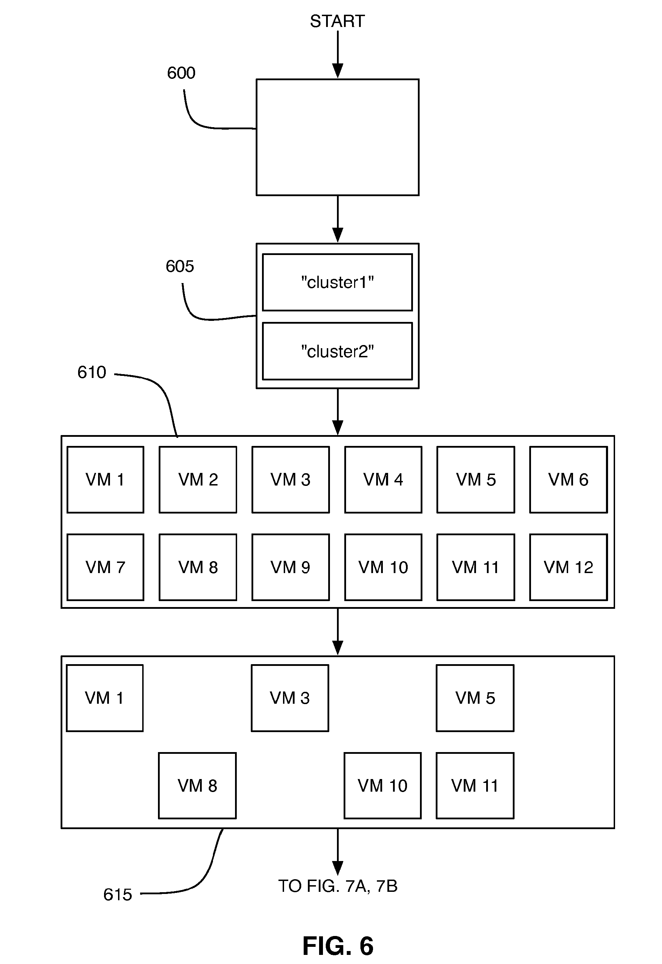

Returning to the example string described in connection with FIGS. 4 and 5, the object-level operators will now be described with references to FIG. 6. FIG. 6 is a high level representation of an example object pipeline as used by the object pipeline-based virtual infrastructure management system of FIG. 1. In FIGS. 4 and 5, the initial commands in the input string are "cluster cluster1" and "cluster cluster2." In this hypothetical case, the execution of the input string may therefore cause the object pipeline-based virtual infrastructure management system **100** to populate the empty state **600** object pipeline with two (pre-named) clusters of virtual machines corresponding to the named "cluster1" and cluster2." The object pipeline-based virtual infrastructure management system **100** uses stored pre-written instruction code indexed to each particular command (such as "cluster," "machines," "with," and "poweron" in the present example string). As described above, recognition of the command enables retrieval and execution of the corresponding pre-written computer code that will actually be used, in some cases along with argument information, in executing the desired function. Therefore, here, recognition of the "cluster" command causes the object pipeline-based virtual infrastructure management system **100** to execute computer code corresponding to the command to effect populating the object pipeline with representations indicating "cluster1" and "cluster2," thereby resulting the object pipeline state **605.**

The subsequent command, "machines," is a dynamic command transforming the "cluster" objects into "virtual machine" representational objects (therefore requiring no argument). The execution of "machines" associated computer code therefore results in the object pipeline state **610,** where the object pipeline is now populated with the virtual machines corresponding to clusters "cluster1" and "cluster2" (*i.e*., **VM1** through **VM12).**

The next command, "with," is a static operation and filters out objects not having the appropriate attribute (which is "power_state:off," from FIG. 4). Recognition of "with" causes the object pipeline-based virtual infrastructure management system **100** to remove all virtual machines from the object pipeline NOT having the designated attribute. Therefore, virtual machines **VM2, VM4, VM6, VM7, VM9** and **VM12** are culled from the object pipeline, leaving **VM1, VM3, VM5, VM8, VM10** and **VM11** in the object pipeline state **615.**

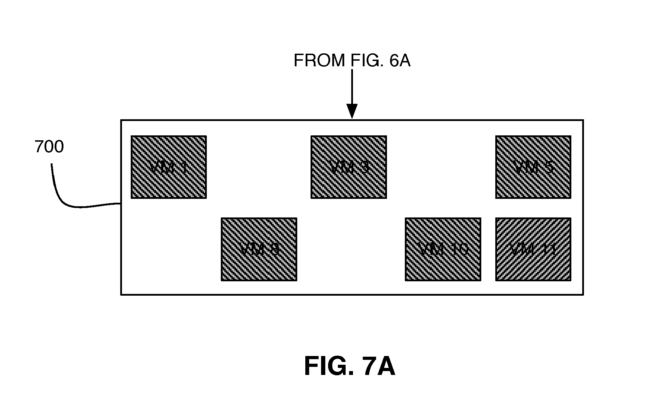

FIG. 7A is a continuing high-level representation of the example object pipeline of FIG. 6. The "poweron" portion of the command string is then used to effect the change to all virtual machines within the object pipeline (i.e., causing them to power on) resulting in object pipeline state **700.**

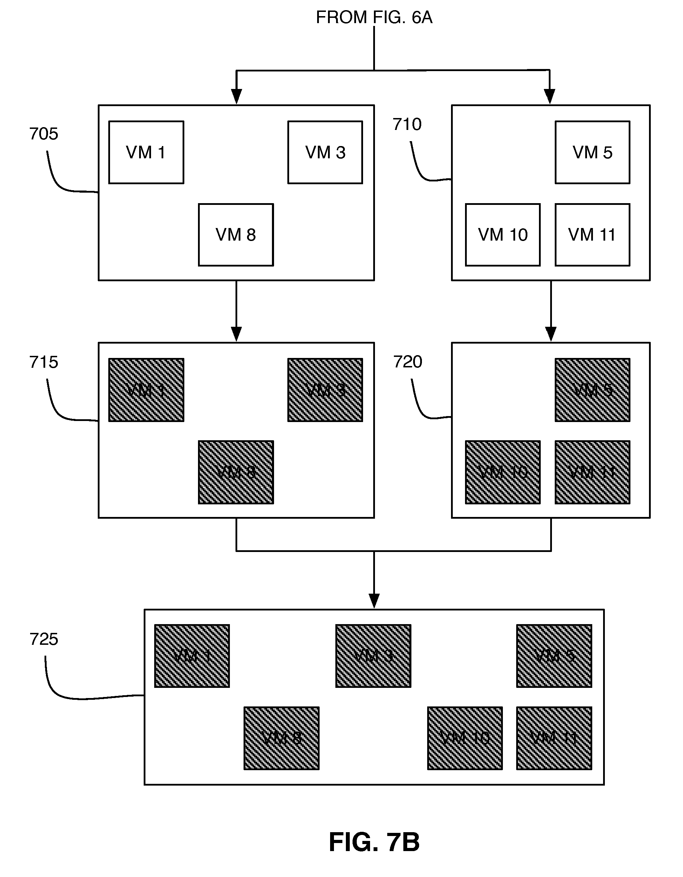

Alternatively, in some implementations, it may be more efficient to partition the object pipeline so as to split the virtual machines into smaller groupings to facilitate execution of actions on the virtual machines. FIG. 7B is an alternative continuing high-level representation of the example object pipeline of FIG. 6. The object pipeline may be split into smaller partitions, resulting in the object pipeline states **705** and **710.** For example, this may be useful when there are a large number of virtual machines within the object pipeline, and execution of an action upon all the virtual machines simultaneously would result in unacceptable performance or other problems, or where the object pipeline contains virtual machines which may in some manner, for example, effect a power of database storage versus general storage. Object partitioning may be performed automatically by the object pipeline-based virtual infrastructure management system **100** in other words when certain conditions are met. Alternatively, in some implementations it may be performed manually by a user, whether via a command in the input string, or through direct intervention through the object pipeline-based virtual infrastructure management system **100** during execution of the input string.

The dynamic operation "poweron" command is executed on the objects in both object pipeline partitions, causing all virtual machines within both object pipeline partitions to set their current status to "on," resulting in the object pipeline state **715** and **720.** Finally, the object partitions are recombined (automatically or via instruction, as described above), resulting in the final object pipeline state **725** for further operations if necessary. However, at this point, the example input string has been fully executed, so the method ends.

It is to be understood that the present disclosure is not limited to the terms or groups defined herein. For instance, other groups may be utilized to execute filtration/selection of virtual machines, such as (but not limited to) servers, hosts, hypervisors, data centers, management servers or any other system or group of systems that is physically or virtually present in the infrastructure and intended to be managed by the object pipeline-based virtual infrastructure management system **100.**

Software process or processes and executables (such as the virtualized machine manager **105,** for example) on the object pipeline-based virtual infrastructure management system **100** may be used to provide human interfaces (such as a graphical user interface), and to store and initiate computer program instructions used to process and analyze data. Computer program code for carrying out operations described herein may be written in any combination of one or more programming languages, including an object oriented programming language such as Java, C++, C# or the like and conventional procedural programming languages, such as the "C" programming language or similar programming languages. The program code may execute entirely on the computing system, partly on the computing system, as a stand-alone software package, partly on the computing system and partly on a remote computer or server, or entirely on a remote computer or server.

This application was described above with reference to flow chart illustrations and/or block diagrams of methods, apparatus (systems) and computer program products according to one or more embodiments. It is understood that some or all of the blocks of the flow chart illustrations and/or block diagrams, and combinations of blocks in the flow chart illustrations and/or block diagrams, can be implemented by computer program instructions. The computer program instructions may also be loaded onto the computing system to cause a series of operational steps to be performed on the computer to produce a computer implemented process such that the instructions that execute on the computer provide processes for implementing the functions/acts specified in the flowchart and/or block diagram block(s). These computer program instructions may be provided to the CPU of the computing system such that the instructions, which execute via the CPU of the computing system, create means for implementing the functions/acts specified in the flowchart and/or block diagram block(s).

These computer program instructions may also be stored in a computer-readable medium that can direct the computing system to function in a particular manner, such that the instructions stored in the computer-readable medium implement the function/act specified in the flowchart and/or block diagram block or blocks. Any combination of one or more computer usable or computer readable medium(s) may be utilized. The computer-usable or computer-readable medium may be, for example (but not limited to), an electronic, magnetic, optical, electromagnetic, infrared, or semiconductor system, apparatus, device, or propagation medium. More specific examples (a non-exhaustive list) of the computer-readable medium include the following: an electrical connection having one or more wires, a portable computer diskette, a hard disk, a random access memory, a read-only memory, an erasable programmable read-only memory (e.g., EPROM or Flash memory), an optical fiber, a portable compact disc read-only memory, an optical storage device, a transmission media such as those supporting the Internet or an intranet, or a magnetic storage device. Any medium suitable for electronically capturing, compiling, interpreting, or otherwise processing in a suitable manner, if necessary, and storing into computer memory may be used. In the context of this disclosure, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in base band or as part of a carrier wave. The computer usable program code may be transmitted using any appropriate medium, including (but not limited to) wireless, wire line, optical fiber cable, RF, *etc.*

Having described and illustrated the principles of this application by reference to one or more preferred embodiments, it should be apparent that the preferred embodiment(s) may be modified in arrangement and detail without departing from the principles disclosed herein and that it is intended that the application be construed as including all such modifications and variations insofar as they come within the scope of the subject matter disclosed.

## Claims

1. A computer-implemented method for managing a virtualized infrastructure, comprising:
receiving an input, the input comprising a string of multiple commands and arguments which, when initiated, will cause a transformational action to be performed on the virtualized infrastructure;
based upon the commands in the string, retrieving instructions which will implement actions called for by the commands in combination with the arguments associated with the commands; and
executing the retrieved instructions to
(i) populate a partition of an object pipeline with entities of the virtualized infrastructure based upon a first of the commands,
(ii) remove at least one entity from the partition based upon a second of the commands and an argument so as to create a reduced population of entities in the partition, and
(iii) perform the transformational action on the reduced population of the entities in the partition based upon a third of the commands.

2. The method of Claim 1, wherein one of the arguments is used in conjunction with execution of the third of the commands.

3. The method of Claim 1 or 2, further comprising:
removing at least another entity from the partition based upon at least a fourth of the commands so as to create a further reduced population of entities in the partition.

4. The method of any of the preceding Claims, further comprising:
dividing the partition into a first partition and a second partition; and
splitting the entities in the first partition so that a first subset of the entities resides in the first partition, and a second subset of the entities resides in the section partition.

5. The method of Claim 4, further comprising:
performing the transformational action on the entities in the first partition; and
performing the transformational action on the entities in the second partition.

6. The method of Claim 5, further comprising;
combining the partition and the second partition so that all the entities are again contained within a single partition.

7. A computer apparatus for managing a virtualized infrastructure, comprising:
at least one programmable processor;
data storage accessible by the processor, wherein the at least one programmable processor is connected to the data storage to receive information from the data storage, wherein the data storage comprises a data architecture having
a hierarchal library of executable commands, the executable commands comprising population executable commands which will cause selecting and filtering of entities within the virtualized infrastructure, and action executable commands which will cause performing of actions on entities within the virtualized infrastructure;
an object pipeline which will be populated with at least some entities present within the virtualized infrastructure based upon a command string;
a command universe defining a structure for the action executable commands, such that a sub-set of available action executable commands for use in the command string is defined by entities present within a current state of the object pipeline;
wherein when an input comprising a string of specific commands and arguments is received, corresponding population and action executable commands are selected from the hierarchal library based upon the specific string, the population and action executable commands are populated with information reflecting the arguments, the populated population executable commands are executed sequentially to establish the object pipeline from among a set of entities in the virtualized infrastructure to which a specific transformational action will be applied, and the action executable commands are executed to perform the specific transformational action on the set populating the object pipeline.

8. The computer apparatus of Claim 7, wherein the object pipeline is divided into at least two object pipeline partitions.

9. The computer apparatus of Claim 8, wherein each of the at least two object pipeline partitions comprise a portion of the set populating the object pipeline.

10. The computer apparatus of Claim 9, wherein the portion in each of the at least two object pipeline partitions are discrete and non-overlapping.

11. The computer apparatus of any of claims Claim 7 to 10, wherein the population commands select and filter entities within the virtualized infrastructure based upon a definition of each entity to obtain the set.

12. The computer apparatus of any of Claims 7 to 11, wherein the population commands select and filter entities within the virtualized infrastructure based upon an attribute of each entity to obtain the set.
